# EUROPÄISCHE PATENTSCHRIFT

(11) **EP 1 476 690 B1**
(45) Veröffentlichungstag und Bekanntmachung des Hinweises auf die Patenterteilung: **04.01.2006**
(21) Anmeldenummer: 03739370.9
(22) Anmeldetag: 20.01.2003
(51) Int. Cl.: F16L 25/00

(54) **HOCHDRUCKWASSER-SCHUTZVORRICHTUNG FÜR WELLROHRVERBINDUNGEN**
HIGH-PRESSURE WATER PROTECTION DEVICE FOR CORRUGATED PIPE CONNECTIONS
DISPOSITIF DE PROTECTION CONTRE L'EAU HAUTE PRESSION POUR RACCORDS DE TUYAUX ONDULES

(30) Priorität: 18.02.2002 CH 271022002
(43) Veröffentlichungstag der Anmeldung: 17.11.2004
(73) Patentinhaber: PMA AG, 8610 Uster (CH)
(72) Erfinder: SCHWARZ, Ernst, CH-8604 Volketswil (CH); KLEEB, Ralf, CH-8344 Bäretswil (CH)
(74) Vertreter: Bruderer, Werner
(86) Internationale Anmeldenummer: PCT/CH2003/000032
(87) Internationale Veröffentlichungsnummer: WO 2003/069205

(56) Entgegenhaltungen:
- CH-A- 645 448
- DE-U- 29 920 972

## Beschreibung

Die Erfindung betrifft eine Hochdruckwasser-Schutzvorrichtung für Wellrohrverbindungen, wobei ein Ende eines Wellrohres in einen Kernhohlraum eines Verbindungs- und Anschlussstückes eingeführt und mittels Befestigungsmitteln in diesem festgelegt ist.

Verbindungs- und Anschlussstücke, bzw. Anschlussarmaturen dieser Art sind in verschiedenen Ausführungsformen bekannt. Die Patentschrift CH 645 448 beschreibt beispielsweise eine Anschlussarmatur für einen flexiblen Wellschlauch. Diese Anschlussarmatur verfügt über ein Gehäuse mit einem Kernhohlraum, wobei ein Ende des Wellschlauches, bzw. Wellrohres in diesen Kernhohlraum eingeschoben ist. Am Gehäuse ist im weiteren ein Durchbruch vorgesehen, in welchen eine Sperreinrichtung eingeschoben wird und mittels welcher das Ende des Wellrohres im Kernhohlraum festgelegt wird. An dem vom Kernhohlraum abgewendeten Ende des Gehäuses ist ein Verbindungsteil in der Form eines Schraubstutzens angeordnet, wobei auch ein anderes bekanntes Verbindungselement angeordnet sein kann. Dieser Schraubstutzen dient dazu, um die Armatur durch Einschrauben in eine Gewindebohrung an einer Wandung eines Gehäuses mit diesem Gehäuse zu verbinden. Der Schraubstutzen kann aber auch durch eine Bohrung durchgesteckt und an der Innenseite mit einer Mutter festgespannt werden. Derartige Wellrohre und Wellrohrverbindungen finden beispielsweise Verwendung, um Kabel oder Kabelbäume zu führen und zu schützen. Im Bereiche des Überganges des Endes des Wellrohres zum Verbindungs- und Anschlussstück ist bei der erwähnten bekannten Lösung eine Dichtung eingelegt, welche das Eindringen von Wasser unter normalen Bedingungen verhindert. Wenn derartige Wellrohre und Wellrohrverbindungen in Bereichen eingesetzt werden, welche starker Verschmutzung ausgesetzt sind, werden zur Reinigung oft Hochdruckreinigungsgeräte eingesetzt. Dies trifft beispielsweise für Strassen- und Eisenbahnfahrzeuge zu. Um bei diesen Anwendungsfällen das Eindringen von Wasser während des Reinigungsvorganges zu verhindern, müssen derartige Wellrohrverbindungen Testbedingungen gemäss DIN 40050, z.B. dem Schutzgrad IP 69 entsprechen. Dieser Schutzgrad verhindert das Eindringen von Wasser bei Hochdruck-/Dampfstrahl-Reinigungsverfahren. Die bekannten Wellrohrverbindungen mit den entsprechenden Dichtungen vermögen diesen Anforderungen nur teilweise zu entsprechen.

Es ist deshalb Aufgabe der vorliegenden Erfindung, eine Wellrohrverbindung zu schaffen, welche Schutz gegen das Eindringen von Wasser bei der Anwendung von Hochdruck-/Dampfstrahl-Reinigungsverfahren bietet und die entsprechenden Industrienormen für Strassen- und Eisenbahnfahrzeuge zu erfüllen vermag. Im weiteren soll die Einrichtung auch bei bereits bestehenden Wellrohrverbindungen angebaut werden können und wie die dazu gehörenden Verbindungs- und Anschlussstücke lösbar mit dem Wellrohr verbindbar sein.

Diese Aufgabe wird durch die im kennzeichnenden Teil des Patentanspruches 1 definierten Merkmale gelöst. Vorteilhafte Weiterbildungen der Erfindung ergeben sich nach den Merkmalen der abhängigen Patentansprüche.

Das ringförmige Zusatzelement, welches an der gegen das Wellrohr gerichteten Stirnseite des Anschlussstückes angeordnet ist, vermag das Eindringen von Spritzwasser und auch das Eindringen von Wasser bei der Anwendung von Hochdruck-/Dampfstrahl-Reinigungsverfahren durch den Verbindungsbereich zwischen dem Ende des Wellrohres und dem Kernhohlraum im Anschlussstück wirksam zu verhindern. Das ringförmige Zusatzelement greift dabei mit einer umlaufenden Rippe, welche am Innenmantel angeordnet ist, in eine Vertiefung am Mantel des Wellrohres ein. Dabei wird das Zusatzelement so angebracht, dass zwischen der Stirnfläche, welche gegen das Anschlussstück gerichtet ist, und der Stirnseite dieses Anschlussstückes ein Dichtungsspalt entsteht. Durch diese Anordnung kann sowohl bei einem in Achsrichtung des Wellrohres aufprallenden Wasserstrahl wie auch bei einem radial aufprallenden Wasserstrahl kein Wasser direkt in den Kernhohlraum des Anschlussstückes eindringen. Aufprallende Wasserstrahlen werden abgelenkt oder der Druck wird durch die Dichtungsspatte zwischen Zusatzelement einerseits und Wellrohr sowie Anschlussstück andererseits soweit abgebaut, so dass die in das Anschlussstück eingelegte bekannte Innendichtung das Eindringen von Wasser zu verhindern vermag. Indem der Durchmesser des ringförmigen Zusatzelementes mindestens so gross ausgebildet ist wie der Aussendurchmesser des Anschlusselementes im Bereich der Stirnseite, wird die Schutzwirkung zusätzlich verstärkt.

Dadurch, dass das ringförmige Zusatzelement in radialer Richtung aus zwei Teilen besteht, ergibt sich der Vorteil, dass das Zusatzelement nach dem Zusammenfügen der Verbindung zwischen Wellrohr und Anschlussstück angebracht werden kann. Die beiden Teile werden über Verbindungselemente miteinander verbunden. Besonders vorteilhaft ist die Ausgestaltung der beiden Teile des Zusatzelementes in der Form von zwei gleichen Ringhälften, welche über Schnappverbindungen miteinander verbunden werden. Eine vorteilhafte Ausführungsform ergibt sich, wenn an jeder der Ringhälfte an einem Endbereich ein Steckelement und am anderen Endbereich eine Aufnahmeöffnung für das Steckelement angeordnet ist. Dadurch sind die beiden Ringhälften identisch ausgebildet und es können beliebige Hälften zu einem Paar zusammengesetzt werden. Dies führt zu einer Kosteneinsparung bei der Herstellung der Teile. Durch die Anordnung einer Zusatzöffnung am Endbereich der Ringhälfte mit der Aufnahmeöffnung können miteinander verbundene Ringhälften mittels eines Hilfswerkzeuges wieder entriegelt und voneinander getrennt werden.

Die Anordnung von mindestens einer Ringnute an der gegen das Anschlussstück gerichteten Stirnfläche des Zusatzelementes führt zu einem verbesserten Druckabbau und damit einer verbesserten Dichtwirkung. Diese Vorteile resultieren dar aus, dass am Dichtungsspalt zwischen Anschlussstück und Zusatzelement eine Labyrinthdichtung ausgebildet wird. Je nach Abmessung, bzw. Durchmesser des Zusatzelementes können beispielsweise zwei oder mehrere konzentrische Ringnuten angeordnet sein. Eine weitere Verbesserung der Dichtwirkung ergibt sich, wenn die gegen das Anschlussstück gerichtete Stirnfläche des Zusatzelementes eine Konusfläche ist. Dabei ist diese Konusfläche gegen das Zentrum des Zusatzelementes geneigt, was zur Folge hat, dass der Dichtungsspalt zwischen Anschlussstück und Zusatzelement nach innen divergiert. Diese Anordnung führt ebenfalls zu einem verstärkten Druckabbau und damit zu einer Verbesserung der Dichtungswirkung. Wenn an der Konusfläche zusätzlich die erfindungsgemässen Ringnuten angeordnet werden, so entsteht eine Kombination mit einer Labyrinthdichtung, welche auch extremen Anforderungen standzuhalten vermag. Bei zweiteiliger Ausführung des Zusatzelementes ist es zweckmässig, die beiden Stirnflächen des Zusatzelementes jeweils gleichartig auszubilden, damit gleich geformte Teile entstehen. Dies vereinfacht den Zusammenbau des Zusatzelementes.

Im folgenden wird die Erfindung anhand von Ausführungsbeispielen unter Bezugnahme auf die beiliegenden Zeichnungen näher erläutert. Es zeigen:
- Fig. 1: einen Längsschnitt durch das Ende eines Wellrohres und ein damit verbundenes Anschlussstück,
- Fig. 2: eine perspektivische Ansicht der Wellrohrverbindung gemäss Fig. 1, wobei ein Teil des ringförmigen Zusatzelementes abgehoben ist,
- Fig. 3: eine Ausführungsvariante eines ringförmigen Zusatzelementes mit konischen Stirnflächen, und
- Fig. 4: eine Ausführungsform eines ringförmigen Zusatzelementes mit Ringnuten an den Stimflächen.

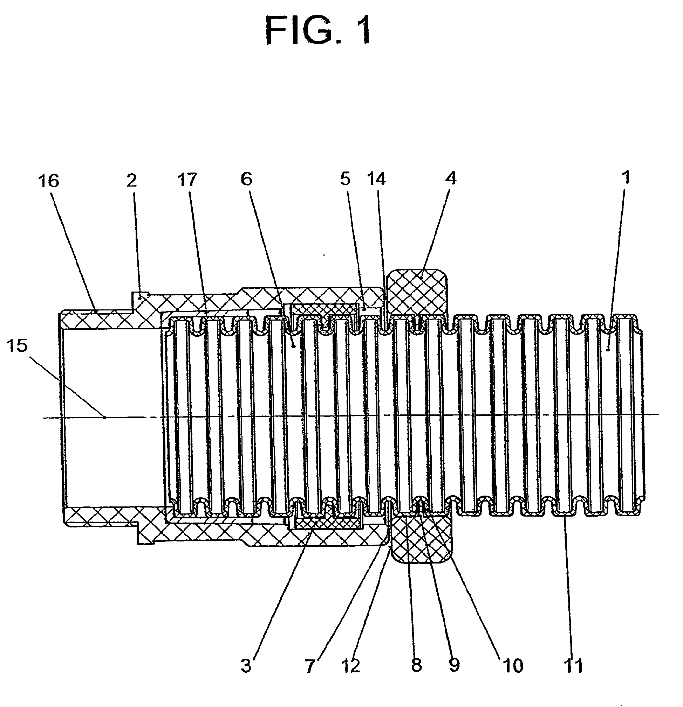

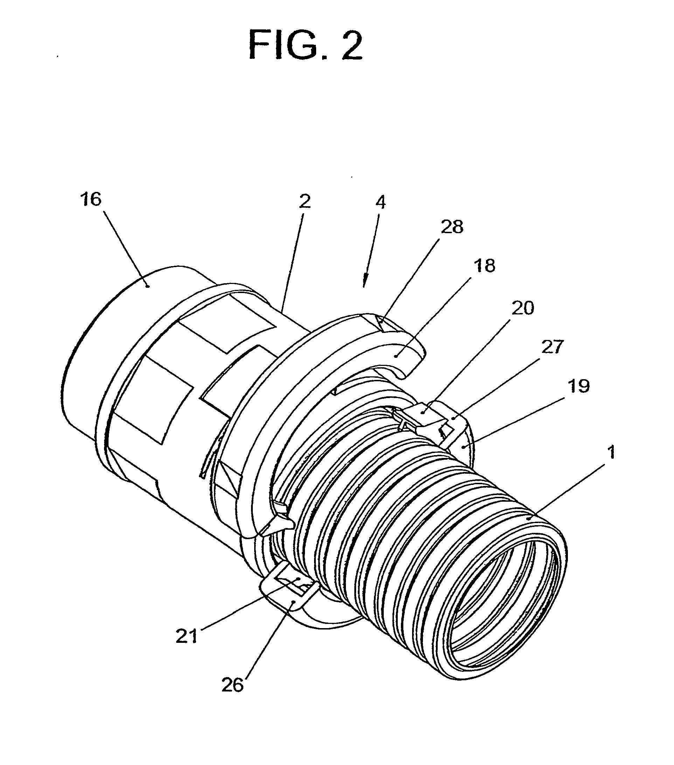

Fig. 1 zeigt einen Längsschnitt durch das Ende 6 eines Wellrohres 1, welches in den Kernhohlraum 5 eines Anschlussstückes 2 eingesteckt ist. Diese Wellrohrverbindung ist an sich bekannt und entspricht einer Anordnung gemäss CH 645 448. Das Anschlussstück 2 weist einen Gewindestutzen 16 auf, welcher dazu dient, das Anschlussstück mit einem nicht dargestellten Gehäuse oder einem anderen Verbindungs- bzw. Anschlussstück zu koppeln. Das Ende 6 des Wellrohres 1 ist im Anschlussstück 2 mit Hilfe eines Befestigungsmittels 3 festgelegt. Dieses Befestigungsmittel 3 wird nach dem Einschieben des Wellrohrendes 6 in das Anschlussstück 2 eingesteckt und hält das Wellrohrende 6 im Anschlussstück 2 fest. Im Kernhohlraum 5 des Anschlussstückes 2 ist am inneren Endbereich eine Dichtung 17 eingelegt. Diese Dichtung 17 ist im dargestellten Beispiel in den Kernhohlraum 5 eingespritzt und besteht beispielsweise aus einem Polyesterelastomer. Diese Dichtung 17 zwischen der Mantelfläche des Kemhohlraumes 5 und dem Aussenmantel des Wellrohrendes 6 ergibt eine dichte Verbindung, welche beispielsweise die Norm EN 60529 gegen das Eindringen von Wasser erfüllt. Wie bereits erwähnt, genügt diese Dichtungsanordnung jedoch nicht, wenn bei Reinigungsvorgängen mittels Wasser-, bzw. Dampfhochdruckgeräten ein Hochdruckwasserstrahl in den Kernhohlraum 5 eindringen kann. Um die Dichtwirkung der Wellrohrverbindung zu verbessern, ist an der gegen das Wellrohr 1 gerichteten Stirnseite 7 des Anschlussstückes 2 um das Wellrohr 1 ein ringförmiges Zusatzelement 4 angeordnet. Dieses Zusatzelement 4 besteht aus zwei Teilen 18, 19, wie aus Fig. 2 erkennbar ist. Am Innenmantel des ringförmigen Zusatzelementes 4 ist eine ringförmige Rippe 9 angebracht. Diese Rippe 9 greift in eine Vertiefung 10 im Mantel 11 des Wellrohres 1 ein und positioniert so das Zusatzelement 4 gegenüber dem Wellrohr 1 und dem Anschlussstück 2. Der äussere Durchmesser des Zusatzelementes 4 ist mindestens so gross wie der äussere Durchmesser des Anschlussstückes 2 im Bereiche der gegen das Wellrohr 1 gerichteten Stirnseite 7. Zwischen dem Anschlussstück 2 und dem ringförmigen Zusatzelement 4 ist ein Dichtungsspalt 14 ausgebildet, welcher einerseits - durch die Stirnseite 7 des Anschlussstückes 2 und andererseits durch die daran angrenzende Stirnfläche 12 des Zusatzelementes 4 begrenzt wird. Durch diese Anordnung verhindert das Zusatzelement 4 einerseits wirksam das direkte Eindringen eines Hochdruckwasserstrahles in den Kernhohlraum 5, und in allfällig umgelenkten Druckwasserstrahlen wird im Bereiche des Dichtungsspaltes 14 und entlang des Mantelbereiches um die Rippe 9 der Druck so stark abgebaut, dass die Dichtwirkung der inneren Dichtung 17 nicht mehr überwunden werden kann.

Aus Fig. 2 ist der Aufbau des Zusatzelementes 4 aus zwei Teilen 18, 19 ersichtlich. Bei den beiden Teilen 18 und 19 handelt es sich jeweils um ein halbkreisförmiges Ringelement, wobei die beiden Elemente identisch ausgeformt sind. An jeder der beiden Ringhälften 18, 19 ist an einem Endbereich 27 ein Steckelement 20 angeformt und am anderen Endbereich 26 ist eine Aufnahmeöffnung 21 angeordnet. Diese beiden Steckelemente 20 und die beiden Aufnahmeöffnungen 21 bilden die Verbindungselemente, über welche die beiden Ringhälften 18, 19 durch Zusammenstecken in radialer Richtung miteinander verbunden werden. Dabei ist das Steckelement 20 hakenförmig und in radialer Richtung federnd ausgebildet. Ein nach aussen stehender Nocken 29 rastet beim Zusammenstecken der beiden Teile 18, 19 in der Aufnahmeöffnung 21 ein und bildet eine formschlüssige Verbindung. Im Endbereich 26 mit der Aufnahmeöffnung 21 jedes Teiles 18, 19 ist eine nach aussen gerichtete Zusatzöffnung 28 angeordnet. Über diese Zusatzöffnung 28 kann das hakenförmige Steckelement 20 mittels eines Hilfswerkzeuges nach innen gedrückt und damit die Steckverbindung zwischen den beiden Teilen 18, 19 gelöst werden. Diese zweiteilige Ausgestaltung des Zusatzelementes 4 mit den erfindungsgemässen Verbindungselementen ermöglicht ein Anbringen des Zusatzelementes 4 an einer Wellrohrverbindung, nachdem das Wellrohr 1 mit dem Anschlussstück 2 verbunden und darin festgelegt ist. Die erfindungsgemässe Hochdruckwasser-Schutzvorrichtung mit dem Zusatzelement 4 kann auch bei bereits vorhandenen Wellrohrverbindungen zusätzlich angebracht werden, ohne dass an den bestehenden Anschlussstücken etwas geändert werden muss. Das Zusatzelement 4 lässt sich bei Bedarf auch wieder entfernen, so dass die Verbindung zwischen Anschlussstück 2 und Wellrohr 1 durch Lösen der Befestigungsmittel 3 wieder getrennt werden kann.

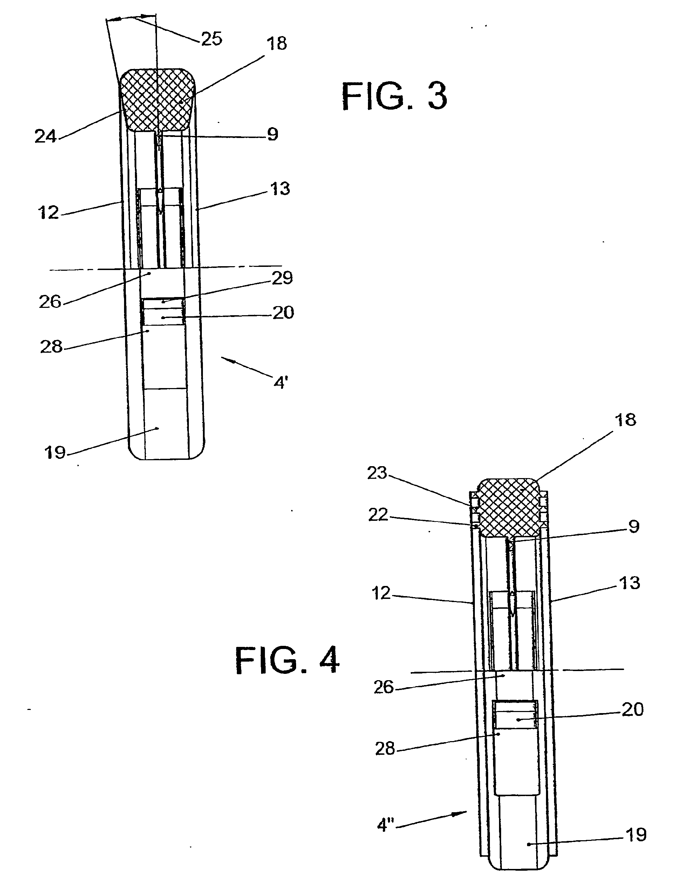

Fig. 3 zeigt eine andere Ausführungsform eines Zusatzelementes 4' in einem Teilquerschnitt. Das Zusatzelement 4' ist ebenfalls aus zwei Ringhälften, bzw. Teilen 18, 19 zusammengebaut, welche formschlüssig miteinander verbunden sind. Mindestens eine der Stimflächen 12,13 des Zusatzelementes 4, und zwar mindestens diejenige, welche gegen das Anschlussstück 2 gerichtet ist, bildet eine Konusfläche 24. Dabei ist diese Konusfläche gegen das Zentrum des Zusatzelementes geneigt und schliesst zu einer Radialebene einen Winkel 25 ein. Dieser beträgt im dargestellten Beispiel 15°. Durch diese Ausgestaltung der Stimflächen 12 und 13 entsteht zwischen der Stirnseite 7 des Anschlussstückes 2 und dem Zusatzelement 4' ein Dichtungsspalt 14, welcher sich von aussen nach innen erweitert. In allfällig eindringenden Hochdruckwasserstrahlen wird dadurch der Druck abgebaut und die Schutzwirkung gegen eindringendes Spritzwasser wird erhöht. Im Endbereich 26 des unteren Teiles 19 ist die Zusatzöffnung 28 sichtbar, welche den Zugang zum Nocken 29 am Steckelement 20 mittels eines Hilfswerkzeuges ermöglicht. Das Steckelement 20 gehört dabei zum oberen Teil 18.

Fig. 4 zeigt eine weitere vorteilhafte Lösung, bei welcher an einem Zusatzelement 4" Labyrinthdichtungselemente ausgebildet sind. Dazu sind an mindestens einer der Stirnflächen 12, 13 mindestens eine Ringnute 22, bzw. 23 angeordnet. Im dargestellten Beispiel sind zwei Ringnuten 22, 23 vorhanden, welche konzentrisch zueinander liegen. Derartige Ringnuten 22, 23 können auch bei der Ausführungsform gemäss Fig. 3 angeordnet sein und deren Wirksamkeit noch zusätzlich verbessern. Durch diese Anordnung von Ringnuten 22, bzw. 23, an der gegen das Anschlussstück 2 gerichteten Stirnseite 12 des Zusatzelementes 4" entsteht im Bereiche des Dichtungsspaltes 14 eine Labyrinthdichtung, welche das Eindringen von Druckwasser wirksam verhindert.

Alle Ausführungsformen des Zusatzelementes 4, 4', bzw. 4" weisen zwei identisch geformte Teile 18, 19 auf. Dadurch wird die Montage der beide Teile 18, 19 zu einem ringförmigen Zusatzelement 4, bzw. 4', bzw. 4" vereinfacht, da es keine unteren oder oberen Teile gibt, sondern die beiden Teile 18, 19 identisch sind. Es ist deshalb auch vorteilhaft, die beiden Stimflächen 12,13 gleichartig auszubilden, damit auch in Bezug auf die Stimflächen 12,13 ein beliebiger Einbau möglich ist.

## Patentansprüche

1. Hochdruckwasser-Schutzvorrichtung für Wellrohrverbindungen, wobei ein Ende (6) eines Wellrohres (1) in einen Kernhohlraum (5) eines Verbindungs- und Anschlussstückes (2) eingeführt und mittels Befestigungsmitteln (3) in diesem festgelegt ist, **dadurch gekennzeichnet, dass** an einer gegen das Wellrohr gerichteten Stirnseite (7) des Anschlussstückes (2) um das Wellrohr (1) ein ringförmiges Zusatzelement (4) angeordnet ist, dieses Zusatzelement (4) am Innenmantel (8) mindestens eine umlaufende Rippe (9) aufweist, welche in eine Vertiefung (10) am Mantel des Wellrohres (1) eingreift und zwischen der Stirnseite des Anschlussstückes (2) und der daran anstossenden Stirnfläche (12) des Zusatzelementes ein Dichtungsspalt (14) ausgebildet ist.

2. Hochdruckwasser-Schutzvorrichtung für Wellrohrverbindungen nach Patentanspruch 1, **dadurch gekennzeichnet, dass** der äussere Durchmesser des ringförmigen Zusatzelementes (4) mindestens so gross ist wie der Aussendurchmesser des Anschlussstückes (2) im Bereiche der Stirnseite (7).

3. Hochdruckwasser-Schutzvorrichtung für Wellrohrverbindungen nach Patentanspruch 1 oder 2, **dadurch gekennzeichnet, dass** das ringförmige Zusatzelement (4) in radialer Richtung aus zwei Teilen (18, 19) besteht, welche über Verbindungselemente (20, 21) miteinander verbunden sind.

4. Hochdruckwasser-Schutzvorrichtung für Wellrohrverbindungen nach einem der Patentansprüche 1 bis 3, **dadurch gekennzeichnet, dass** mindestens in der gegen des Anschlussstück (2) gerichteten Stirnfläche (12) des Zusatzelementes (4") mindestens eine Ringnute (22, 23) angeordnet ist und am Dichtungsspalt (14) zwischen Anschlussstück (2) und Zusatzelement (4") eine Labyrinthdichtung ausgebildet ist.

5. Hochdruckwasser-Schutzvorrichtung für Wellrohrverbindungen nach einem der Patentansprüche 1 bis 4, **dadurch gekennzeichnet, dass** mindestens die gegen des Anschlussstück (2) gerichteten Stirnfläche (12) des Zusatzelementes (4') eine Konusfläche (24) ist, wobei diese Konusfläche (24) gegen das Zentrum des Zusatzelementes (4') geneigt ist.

6. Hochdruckwasser-Schutzvorrichtung für Wellrohrverbindungen nach Patentanspruch 3, **dadurch gekennzeichnet, dass** die beiden Teile (18, 19) des Zusatzelementes (4) aus je einer Ringhälfte bestehen, diese beiden Ringhälften (18, 19) über Schnappverbindungen miteinander verbunden sind und jede der Ringhälften (18, 19) an einem Endbereich (27) ein Steckelement (20) und am anderen Endbereich (26) eine Aufnahmeöffnung (21) für das Steckelement (20) aufweist.

7. Hochdruckwasser-Schutzvorrichtung für Wellrohrverbindungen nach Patentanspruch 6, **dadurch gekennzeichnet, dass** an jeder Ringhälfte (18, 19), am Endbereich (26) mit der Aufnahmeöffnung (21), eine Zusatzöffnung (28) zum Entriegeln der Schnappverbindung angeordnet ist.

## Claims

1. A high-pressure water protection device for corrugated pipe connections, in which one end (6) of a corrugated pipe (1) is introduced into a core cavity (5) of a joining and connecting piece (2) and is fixed therein by fastening means (3), **characterised in that** an annular supplementary element (4) is arranged around the corrugated pipe (1) on an end face (7) of the connecting piece (2) which is directed towards the corrugated pipe, this supplementary element (4) has, on the inner curved surface (8), at least one circumferential rib (9) which engages in a depression (10) in the curved surface of the corrugated pipe (1), and a sealing gap (14) is incorporated between the end face of the connecting piece (2) and the end face (12), abutting against said connecting piece, of the supplementary element.

2. A high-pressure water protection device for corrugated pipe connections according to Claim 1, **characterised in that** the external diameter of the annular supplementary element (4) is at least as great as the external diameter of the connecting piece (2) in the region of the end face (7).

3. A high-pressure water protection device for corrugated pipe connections according to Claim 1 or 2, **characterised in that** the annular supplementary element (4) comprises two parts (18, 19) in the radial direction which are connected together by way of connecting elements (20, 21).

4. A high-pressure water protection device for corrugated pipe connections according to one of Claims 1 to 3, **characterised in that** at least one annular groove (22, 23) is arranged at least in the end face (12) of the supplementary element (4") which is directed towards the connecting piece (2) and a labyrinth seal is constructed on the sealing gap (14) between the connecting piece (2) and the supplementary element (4").

5. A high-pressure water protection device for corrugated pipe connections according to one of Claims 1 to 4, **characterised in that** at least the end face (12) of the supplementary element (4') which is directed towards the connecting piece (2) is a conical face (24), this conical face (24) being inclined towards the centre of the supplementary element (4').

6. A high-pressure water protection device for corrugated pipe connections according to Claim 3, **characterised in that** the two parts (18, 19) of the supplementary element (4) each comprise a ring half, these two ring halves (18, 19) being connected together by way of snap connections and each of the ring halves (18, 19) having a plug-in element (20) in one end region (27) and a receiving opening (21).for the plug-in element (20) in the other end region (26).

7. A high-pressure water protection device for corrugated pipe connections according to Claim 6, **characterised in that**, on each ring half (18, 19), a supplementary opening (28) for unlocking the snap connection is arranged in the end region (26) with the receiving opening (21).

## Revendications

1. Dispositif de protection contre l'eau à haute pression pour raccords de tuyaux ondulés, dans lequel une extrémité (6) d'un tuyau ondulé (1) est introduite dans une cavité centrale (5) d'un élément de liaison et de raccordement (2) et est immobilisée dans celle-ci par des moyens de fixation (3), **caractérisé en ce qu'**un élément additionnel (4) de forme annulaire est agencé sur un côté frontal (7), dirigé contre le tuyau ondulé, de l'élément de raccordement (2) autour du tuyau ondulé (1), cet élément additionnel (4) comprend sur l'enveloppe intérieure (8) au moins une nervure périphérique (9) qui s'engage dans un renfoncement (10) sur l'enveloppe du tuyau ondulé (1), et un intervalle d'étanchement (14) est ménagé entre le côté frontal de l'élément de raccordement (2) et la surface frontale (12) butant contre celui-ci de l'élément additionnel.

2. Dispositif de protection contre l'eau à haute pression pour raccords de tuyaux ondulés selon la revendication 1, **caractérisé en ce que** le diamètre extérieur de l'élément additionnel annulaire (4) est au moins aussi grand que le diamètre extérieur de l'élément de raccordement (2) dans la zone du côté frontal (7).

3. Dispositif de protection contre l'eau à haute pression pour raccords de tuyaux ondulés selon l'une ou l'autre des revendications 1 et 2, **caractérisé en ce que** dans la direction radiale l'élément additionnel annulaire (4) est constitué par deux parties (18, 19) qui sont reliées l'une à l'autre via des éléments de liaison (20, 21).

4. Dispositif de protection contre l'eau à haute pression pour raccords de tuyaux ondulés selon l'une des revendications 1 à 3, **caractérisé en ce qu'**au moins dans la surface frontale (12) de l'élément additionnel (4") dirigée contre l'élément de raccordement (2), il est prévu au moins une gorge annulaire (22, 23), et **en ce qu'**un joint à labyrinthe est réalisé au niveau de l'intervalle d'étanchement (14) entre l'élément de raccordement (2) et l'élément additionnel (4").

5. Dispositif de protection contre l'eau à haute pression pour raccords de tuyaux ondulés selon l'une des revendications 1 à 4, **caractérisé en ce qu'**au moins la surface frontale (12) de l'élément additionnel (4') dirigée contre l'élément de raccordement (2) est une surface conique (24), cette surface conique (24) étant inclinée vers le centre de l'élément additionnel (4').

6. Dispositif de protection contre l'eau à haute pression pour raccords de tuyaux ondulés selon la revendication 3, **caractérisé en ce que** les deux parties (18, 19) de l'élément additionnel (4) sont constituées chacune par un demi-anneau, **en ce que** ces deux demi-anneaux (18, 19) sont reliés l'un à l'autre via des liaisons à encliquetage et **en ce que** chacun des demi-anneaux (18, 19) comprend à une zone d'extrémité (27) un élément enfichable (20) et à l'autre zone d'extrémité (26) une ouverture de réception (21) pour l'élément enfichable (20).

7. Dispositif de protection contre l'eau à haute pression pour raccords de tuyaux ondulés selon la revendication 6, **caractérisé en ce que** sur chaque demi-anneau (18, 19), à la zone d'extrémité (26) pourvue de l'ouverture de réception (21), il est prévu une ouverture additionnelle (28) pour déverrouiller la liaison à encliquetage.
